# NEW EUROPEAN PATENT SPECIFICATION

(11) **EP 0 230 364 B2**
(45) Date of publication and mention of the opposition decision: **07.09.1994**
(45) Mention of the grant of the patent: 27.12.1991
(21) Application number: 87300246.3
(22) Date of filing: 13.01.1987
(51) Int. Cl.: B05D 1/00, B44C 1/17, B44C 3/08

(54) **Composite useful for paint transfer and method of use and preparation thereof**
Zusammengestelltes Produkt zum Übertragen von Farbe sowie dessen Gebrauchsweise und Herstellung
Produit composite pour le transfert de peinture, son mode d'utilisation et sa préparation

(30) Priority: 14.01.1986 US 818795
(43) Date of publication of application: 29.07.1987
(73) Proprietor: MINNESOTA MINING AND MANUFACTURING COMPANY, St. Paul, Minnesota 55133-3427 (US)
(72) Inventor: Johnson, Bruce E. c/o Minnesota Mining and, St. Paul Minnesota 55133-3427 (US); Naglosky III, Max c/o Minnesota Mining and, St. Paul Minnesota 55133-3427 (US)
(74) Representative: Baillie, Iain Cameron

(56) References cited:
- WO-A-84/03473
- WO-A-86/01771
- US-A- 3 549 446
- US-A- 3 679 510
- US-A- 3 813 270
- US-A- 4 101 698
- US-A- 4 548 857
- US-A- 4 818 589
- Affidavit of Dr. K. Josephy, with Exhibits JA to JL
- Affidavit of V. H. Rampelberg, with RA to RH

## Description

### Field of the Invention

This invention relates to a paint transfer composite which may be used to apply a coating to a substrate and to the preparation and use of such a composite.

More particularly, this invention relates to a paint/adhesive composite which allows for the transfer of a paint coating to the surface of a component such as the exterior surface of an automobile body panel,for example.

### Background of the Invention

Many articles of manufacture have structural components, the exterior surfaces of which define a compound surface, for example, automobile door panels, fenders, hoods, and the like. The exterior surfaces of these compound structural components have been painted by various techniques in order to apply a protective and decorative coating thereto. There have been improvements made in the paints and in the application equipment, yet the basic features of the commercially used processes remain essentially unchanged. In general, a paint is reduced to a satisfactory viscosity with solvents, and is then applied or propelled onto the surface of the end product. Solvent is then allowed to evaporate into the air at point of application and also in bake ovens used to cure or dry the paint. The pollution resulting from the evaporation of the volatile organic compounds used as paint solvents has led to the use of expensive solvent collectors and after burners to reduce this pollution.

The paint industry has developed coatings that have reduced solvent content but they still do not meet many environmental, performance or economic requirements. Electrostatic application devices have been designed to develop high transfer efficiencies, however, the solvent has to be discharged in ovens, if not the spray booth.

British Patent No. 1,444,748 describes a process of applying a decal to a contoured ceramic surface wherein heat is applied to activate the adhesive. This process requires perforation in the critical layer.

U.S. Patent No. 3,813,823, entitled "Heated Vacuum Pressure Press", describes a transfer process for printed circuitry. A conventional heat-vacuum applicator is modified with the added dimension of air pressure, the pressure being exerted above the diaphragm that holds the work on the vacuum platen. This provides more positive contact such that the printed circuitry is transferred in greater detail from the workpiece to a flexible film. This patent thus describes an on-contact vacuum-pressure-heat cycle that is applicable to essentially flat surfaces.

Heat-vacuum application of decals, woodgrain prints, signing, etc. has been common practice in the art. The conventional practice involves the contact placing of a film article, coated with a heat activatable adhesive, onto an application surface. It is the accepted practice to perforate the adhesive coated film to provide release of entrapped air. The work piece is covered with a rubber diaphragm that is hinge mounted on a vacuum platen. The vacuum forces the film into intimate contact with the application product surface and air escapes through the perforations as the film product spreads out evenly on the surface, with the cool adhesive still in a non-tacky state. Heat is then applied to activate the adhesive and cause bonding. This application procedure is satisfactory for application to flat or mildly contoured surfaces, provided that the adhesive coated film can stretch around the contours while the adhesive is in a relatively tack-free state, and provided that air has been removed through perforations in the substrate. The heat to activate the adhesive is applied only after full contact is made, otherwise bubbles and wrinkles will form. This process does not lend itself to high speed production. The vacuum applicator must be cooled down completely prior to the insertion of the next item otherwise that item would prebond when the adhesive prematurely heats up.

British Patent No. 1,475,051 describes a vacuum-heat process for transferring a pre-coated paint, dye, or lacquer to a contoured shape by pneumatic means. The paint or dye is coated on a carrier and must be in a liquid state during the transfer. The liquid coated carrier is forced into contact with the article with pneumatic differential pressures. Contact is maintained for sufficient time to effect transfer. Heat is then applied to remove the solvents and cure the paint.

U.S. Patent No. 3,549,446 describes a machine and process for applying a decal to a concave dish shaped surface. The decal, which separates upper and lower chambers of the machine, has a hole cut in the carrier paper, close to the center, in line with a pressure source in the upper chamber. The vacuum in the upper chamber holds the carrier up, while the vacuum in the lower chamber peels the decal down off the carrier. Pressure is exerted through the hole in the carrier to force initial peel in the center, causing the decal to balloon radially outward. Initial contact is thus made at the center. Heated air is used to activate the adhesive as it is making contact.

U.S. Patent No. 3,813,270 discloses a heat transfer machine wherein a decal is transferred in a heated press to a piece of apparel, held down on a vacuum platen.

U.S. Patent No. 4,101,698, entitled "Elastomeric Reflective Metal Surfaces", discloses a film laminate construction of a polyurethane coating on a temporary release carrier, with a heat-activated or pressure- sensitive adhesive. Metal vapor is deposited between the elastomeric urethane and the adhesive to give the coating a bright look. The laminate is forced into a female cavity of a mold by the pressure of the hot backfilling molding compound. The adhesive sets onto the molding compound such that when the mold is opened, the hardened compound has a urethane protected bright surface.

There have been several heat transfer applications that do not include pneumatic pressures to apply a conformable laminate:
U.S. 3,928,710 - "Heat Activated Transfers";
DE 3028823 CR - (Heat Transfer in general);
U.S. 3,907,974 - "Cureable Decorative Systems for Glass and Metal Containers";
British Patent No. 2,081,645 - "Apparatus for Applying Decals";
U.S. 4,263,077 - "In-Press Transfer Painting of Hardboard";
U.S. 3,679,506 - "Transfer Coating Process"; and German Plastics Article: On Hot Stamping: Kunst- stoffe 72(#11 )1982.
U.S. Patent No. 3,640,791, entitled "Process for Preparing and Applying an Improved Painting Device", discloses a paint transfer process for automobiles and a precoated paint, coated on a releasable carrier, that has a water activatable or pressure sensitive adhesive on the paint. This is generally described as a patch.

In International Publication Number W084/03473, the title of which is "Heat Transfer Pad Decoration and Substrate Therefor", a heat transfer product for a contoured surface is described. The product consists of a polyamide adhesive/release coating on a paper liner, printed with an ink and protected with a dear coat. The polyamide is referred to an adhesive/release coating because it releases from the paper when heated and acts as a hot melt adhesive when in contact with a substrate. The transfer is picked up with a hot silicone sponge from the paper and pressed onto the contoured application surface. The polyamide creates a bond and the sponge then releases.

Laminates wherein paint layers, such as ones having wood grain finishes suitable for use in the interior of automobiles, are present in combination with acrylonitrile-butadiene-styrene (ABS) polymer layers have been sold under the trade mark Thermark. Such laminates have a relatively thick ABS layer and can be incorporated into desired objects by injection molding additional ABS resin into a mold containing the laminate.

Among the problems experienced by the industry or cited in the art, are:
1) composites that can't be applied to three dimensional contours without the bubbles and wrinkles caused by pre-adhesion;
2) solvent emissions at component assembly sites;
3) films which need to be perforated to be applied;
4) the necessity of holes in substrates to allow a vacuum therethrough to apply a composite; and
5) adhesives having poor adhesive performance under varying environmental conditions.

In summary, a need exists in the art for a paint composite that can be applied easily and inexpensively and yet will provide a durable protective coating over a range of thermal environments.

### Summary of the Invention

The invention provides a paint transfer composite comprising:
(a) a continuous layer comprised of a heat-activatable adhesive capable of bonding to a substrate in a conventional heat-vacuum process and having a glass transition temperature below about -15_{°}C and a tensile modulus of at least about 1.72 MPa (250 psi) at about 93 _{°} C, and
(b) a continuous coating of dry paint on one major face of said adhesive layer.

Preferred embodiments of the composite are defined in claims 2 to 7.

This invention also provides a method of paint transfer comprising:
a) mounting a compound structural component in a vacuum chamber having an opening, the area of which is no smaller than the surface of said compound structural component such that the surface of the compound structural component to be painted communicates therewith;
b) sealing the opening of the vacuum chamber which communicates with the surface of the compound structural component with the paint transfer composite defined above in a manner such that the heat activatable adhesive layer communicates with the surface of the compound structural component to be painted;
c) drawing air from said vacuum chamber and exposing the paint transfer composite to heat sufficient to allow the composite the vacuum thermoform onto said surface of the compound structural component but insufficient to activate the adhesive layer; and
d) then exposing the adhesive layer to heat sufficient to activate the adhesive layer; and
e) allowing the heat-activated adhesive to cool while maintaining the vacuum used to thermoform the composite until the adhesive has cooled below its activation temperature.

When the compound structural component has severe three-dimensional contour, step d) is preferably accomplished by contacting the exposed surface of the composite with sufficient heated, forced air to form the composite about the component as well as activate the adhesive.

This invention also provides a method of preparing a paint transfer composite comprising:
a) coating a carrier liner with a continuous layer of paint;
b) drying the paint to form a dry paint coating; and
c) coating the exposed surface of the paint coating with a continuous layer of a heat-activatable adhesive which has a sufficiently low glass transition temperature and a sufficiently high tensile modulus to resist damage to the adhesive layer on impact.

This invention further provides a method of preparing a cold formed metal compound component comprising applying a composite as described above to a substantially planar metal substrate with the heat-activatable adhesive layer in contact therewith, and cold-forming the substrate to the desired compound shape.

This invention also provides a cold-formable metal substrate comprising a substantially planar metal substrate, a continuous layer of a heat-activatable adhesive having a sufficiently low glass transition temperature and a sufficiently high tensile modulus to resist damage to said adhesive layer on impact on at least one surface of said metal substrate and a continuous coating of dry paint on the exposed major face of said continuous layer of said heat-activatable adhesive.

The composite of this invention can be applied to substantially coplanar metal stock, e.g., placed on the metal stock with the adhesive in contact with the metal, subjected to heat to activate the adhesive and allowed to cool to ambient temperature. The covered metal stock can then be cold-formed, e.g., stamped, to form a compound component. It has been found that the use of the adhesive yields a product which can be stamped without a deleterious effect on the dry paint coating. This invention accordingly eliminates the need to form a compound metal part before it is painted.

The invention enables concerns of solvent mission at automobile assembly sites to be overcome and provides a paint coating having excellent performance in use. The invention enables all emission to be concentrated at one location, i.e., the site of manufacture of the composite article, making it more economically feasible to recover the solvents because the composite of this invention does not require the emission of solvents at automobile assembly plant sites, as the paint is thermally activated and bonded without further use of solvents. The properties of the heat-activated adhesive provides excellent performance of the composite as a protective coating using standard metallic automobile body paints.

### Detailed Description of the Invention

The components of a first embodiment of this invention may be described as a carrier liner, a dry paint coating, and a heat-activatable adhesive.

The carrier functions as a temporary support for the coatings. It should have a specific combination of properties for optimal results. It should have:
1) chemical resistance to resist the solvents of the coatings that are metered onto its surface;
2) temperature resistance, to maintain dimensions and shape, up to the temperature required to dry and cure the paint;
3) uniformity in thickness, gloss and texture, because the subsequent coatings take on these features when they are peeled off;
4) physical strength to pull through a coater and oven drier, with minimal stretch or tearing; and
5) The appropriate surface energy to allow for uniform lay down of coatings, without non-wet spots, and uniform release of the coatings when peeled.

The carrier must possess an additional property in a second embodiment in which the carrier is used as a protective skin during thermoforming. This requires that the carrier have a softening temperature above the temperature, at which the paint and adhesive coatings thereon are cured, and that it respond to thermoforming by either vacuum and/or pressure forces.

There exists a third embodiment in which the carrier at times may become an integral part of the final thermoformed coating. This mandates high adhesion values of the coatings to the carrier, in addition to the other properties discussed in cases one and two.

Preferred carriers are polymeric films having high tensile strength. Particularly preferred are polycarbonates, uniaxially oriented polypropylenes, and biaxially oriented polyethylene terephthalates, each having a thickness of from about 0.076 mm (0.003") to about 0.127 mm (0.005").

The dry paint coating utilised in this invention is preferably comprised of a clear coating and a pigmented base coating. One of the advantages of this invention is the utility of a standard automobile body paint as the paint coating of the composite of this invention. Of course, a paint could be specially formulated for use in the composite of this invention, but it is not necessary to do so to obtain a composite of this invention having a protective coating of excellent performance.

The optional clear coating is used to impart an appearance of depth, and in certain cases, to protect the sub-layers from environmental erosion caused by acid rain, ultraviolet light, and general weathering. The clear coating should be formulated to:
1) be compatible with the chosen paint;
2) release or adhere to the carrier, dependent upon the type of application;
3) dry or oross-link at an energy level below that needed to thermoform the composite; and
4) elongate at the forming temperature without stress cracking or rupture, and then perform after being firmly bonded, in this state of elongation, according to the particular application requirements. Examples of suitable clear coatings include melamine modified polyurethane lacquers, such as that sold under the tradename HCC-1000 Elastomeric Enamel by PPG Industries, Inc., and two-part polyurethanes.

The cures paint coating may function as the outermost layer of the final product, but it is often protected with the above-mentioned clear coating. This base coat should be formulated to:
1) yield the appropriate color;
2) provide the correct loading of pigments, e.g., metallic pigments;
3) adhere to the clear layer or release from the carrier;
4) provide the same balance of thermal and dimensional properties as the clear coating; and
5) elongate in concert with the clear coating.

Suitable examples of paints are those currently used commercially as autobody base coats, e.g., the Durathane ^{TI} Series available, from PPG Industries, Inc.

The critical requirement of the adhesive layer is to resist damage to the adhesive layer on impact, i.e., the adhesive should desirably:
(1) exist in a rubbery state under all use conditions, rather than being glassy in cold weather and soft in warm climates, to maintain gouge or mar resistance, and resist creep or movement, and
(2) have sufficient internal strength at all use temperatures (e.g. -34.4 _{°} C (-30 ° F) to 93.3 ° C (200 ° F) to resist penetration by impacting stones and other objects, preventing fracture of the metallic subsurface, thus avoiding electrochemical corrosion.

The critical requirements are met by an adhesive having (1) a low Tg, preferably at or below 20 ° C more preferably below about -15°C and most preferably at or below about -30 ° C, and (2) a high tensile modulus, at least about 1.72 MPa (250 psi) at about 93 ° C, even more preferably at least about 3.45 MPa (500 psi) at about 93 _{°} C. Preferred adhesives having these characteristics are the aliphatic polyurethane thermoplastic elastomers, e.g., Quinn™ 4820 available from K.J. Quinn Co. Particularly preferred is the aliphatic linear polyurethane elastomer available from Mobay as Desmolac ^{TM} 4125.

Applications not intended for severe environmental conditions may use adhesives that have only moderate glass transition temperatures and tensile moduli. The adhesive for these applications should have a glass transition temperature below about 20 _{°} C. In addition to preferred adhesives listed in the preceding paragraph, other suitable adhesives are the polyurethane elastomers Permuthane ^{TM} U-4715, available from Beatrice Chem., Quinn QI-17, from K.J. Quinn, A.V.

In addition, the preferred adhesives have the following properties:
1) high ply adhesion strength to the pigmented base coating;
2) high bond strength to the intended application surface;
3) resistance during the bonding heat cycle to discoloration that might affect the coloration of the pigmented base coating;
4) a tack-free state to allow for wind-up and unwind of the product, and for resistance to pre-adhesion to other objects or the intended application surface;
5) an activation, i.e., softening, temperature at or above the thermoforming temperature of the composite; and
6) retention of its physical properties and bond strength throughout the life of the product.

### Example 1

Biaxially oriented polyethylene terephthalate was used as the carrier available from 3M as Scotchpar™ Brand Polyester film. The thickness was 0.004 inches (0.1 mm). The film contained an aluminum silicate addtive. The film was of uniformly high gloss and had a controlled caliper.

A clear lacquer was cast on this carrier, using a conventional bar coater set with a 6 mil orifice. The clear coating used in this Example was melamine modified polyurethane lacquer, identified as HCC-1000 Elastomeric Enamel, sold by PPG Industries, Inc.

The coated film was pulled through a conventional convention oven, heated at 200 _{°} F (93 ° C) for a short period to evaporate initial solvent, then heated at 250 _{°} F (121 ° C) for approximately 20 minutes. It exited the oven, was allowed to cool, and was wound up on a core.

HSE-8536 Silver Metallic, a pigmented paint sold by PPG Industries, Inc. under the tradename Durathane 700 Series, was likewise coated on the lacquer side of the above linear, using identical conditions for coating and drying.

A polyurethane solution sold by Mobay Chemical Corporation under the tradename Desmolac ^{TM} 4125 was lastly coated over the color coating. It was coated using the same device at a 6 mil orifice setting. The adhesive was dried at 250 _{°} F (121 ° C) for a period of approximately 10 minutes, then the coated carrier was wound onto a core.

The composite of dried, cured coatings was peeled off the carrier. A piece was cutout, oversize to the intended application, laid down on the part, with the adhesive side making contact, on the platen of a Heat-Vacuum Application Model HVA 2 or 6.

A frame was hinge mounted to the platen, having a silicone rubber diaphragm mounted on all four sides. This diaphragm was held off contact at the initial stages of the vacuum draw, so that contact was made initially on the top of the part. The diaphragm then engulfed the part, forcing the paint composite into intimate contact with the part.

Heat lamps mounted above the diaphragm were turned on so that the total application composite heated up to a thermostatically cut off point of approximately 320 _{°} F (160° C). The sample was then cooled while under vacuum tension, to prevent contractive forces from disturbing the adhesive bond.

The cooled part was removed and examined. The part had a uniform paint coating adhered to all the critical surfaces and conformed well to the contours, including the corners.

### Example 2

The experiment of Example 1 was repeated, making one substitute, the composition of the clear coating. The clear in this Example was formulated from a two part polyurethane.

Desmodur™ N-75 was reacted with a 50/50 blend by solids, of Desmophen™ 670-90 and DesmophenTM 651-A65, at a NCO-OH ratio of 1.1-1.0. All three components are sold by Mobay Chemical Company.

The finished application was very similar in appearance to what resulted in Example 1.

### Example 3

Example 1 was repeated, omitting the clear lacquer. The pigmented paint coating was coated directly on the carrier. The resulting base color adhesive composite was stripped after oven drying with similar results.

### Example 4

Uniaxially oriented polypropylene, SK 500 film, sold by Trea, Inc. was coated with the clear, colored base coating, and adhesive, per Example 1, using the same coater. The SK 500 film had been pretreated with a corona to a mN/m (dyne/cm) level of 37, run according to ASTM-D2578-67.

The composite was heated with ceramic elements, and cycled over the part. The part, mounted on a vacuum platen, was forced into contact with the heated film, as a vacuum was drawn to force intimate contact. The source of heat was then cycled to expose the coated part to heated air under pressure to fully form the composite about the part and to activate the adhesive. The part was cooled with compressed air while under vacuum. The carrier film was peeled off, after the pressure was normalized, leaving a three-dimensional part with paint over the intended critical surfaces.

### Example 5

Polycarbonate film, 0.076 mm (.003") thick, identified as 880-112 by General Electric Corporation, was coated with the same coatings disclosed in Example 1. The composite was applied as in Example 2. The polycarbonate film in this Example was bonded to the coatings and remained a part of the finished part.

### Examples 6-8

A series of test samples were prepared to compare results obtained when different adhesives were used. The construction of Example 1 was repeated for Examples 6-9, however Example 7 used an acrylic adhesive identified as DuPont 68070 Adhesive, and Example 8 used a tailored terpolymer of isobutyl acrylate, bury acrylate and acrylic acid in a 65-25-10 weight ratio, having a calculated Tg of 42 ° C. Example 6 was a repeat of Example 1, using Desmolac ^{TM} 4125.

These samples were hot-pressure applied to steel panels, precoated with a primer available from PPG Industries as "Uniprime". The shear creep and 180_{°} peel adhesion tests were conducted with the carrier attached, as it acts as a reinforcing layer which is needed to obtain numerical results in these tests.

Shear creep tests were conducted wherein a 12.7 mm x 50.8 mm (1/2" x 2") strip was cut, with 12.7 mm x 12.7 mm (1/2" x 1/2") adhered to the panel.

A 1 kg weight was attached to the extended tail of the strip and the assembly was placed in ovens of various temperatures. The time for failure was noted when the total strip creeped off the panel.

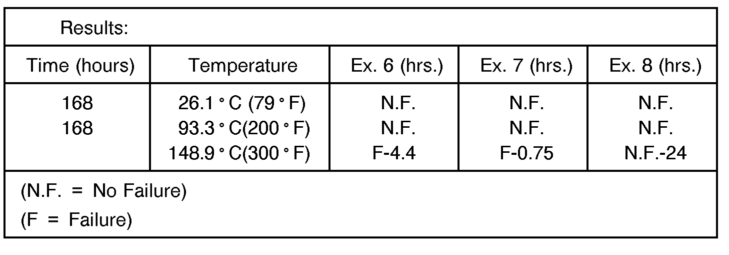

180 ° peel adhesion tests were also run on replicates of the above Examples and replicates wherein the primed steel was replaced with reaction injection molded (RIM) urethane parts available from Mobay Chemical Corp.

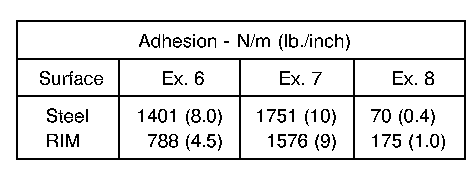

Finally, Gravelometer tests were run at -28.9° C (-20 ° F), following, the Society of Automotive Engineering J400 Chip Rating Standards (size of chips rated on scale of A-D, A being smallest, D largest and frequency of chips rated on a scale of 9-0, 9 being least frequent, 0 being most frequent). The results were judged to be:
Ex.6-4A
Ex.7-7C
Ex.8-4C

The above results show that the high Tg adhesive had excellent resistance to shear creep but the poorest chip rating. The best adhesive, i.e., having optimal properties, was Desmolac™ 4125, an aliphatic linear polyurethane elastomer.

### Example 9

HCC 1000 PPG Clear and Canyon Red PPG 700 series automotive paint were sequentially coated with a conventional knife coater, on 0.102 mm (4 mil) polyethylene-terephthalate film, each coating at a 0.152 mm (6 mil) bar orifice. Each layer was cured for 5 min. Desmolac" 4125 was then in like manner coated over the paint and cured for 30 min.

The above coated film was then cut to size and bonded to Uniprimed Steel test panels obtained from Advanced Coating Technologies Inc., using a Hix Press, set at 160 _{°} C to 171.1 _{°} C (320-340 ° F), for a time of 30 seconds.

These painted panels were then subjected to cold metal stamping in the machine shop to introduce 3 corrugations of varying size: the largest corrugation was 25.4 mm (1 inch) across, 6.35 mm (1/4 inch) deep, the intermediate was 20.6 mm (13/16 inch) across and 4.76(3/16 inch) deep and the smallest was 19.1 mm (3/4 inch) across and 3.18 mm (1/8 inch) deep.

(The PET film protects the paint from the stamping oils and general handling abuse. It can be removed at any convenient time after stamping.) When removed, the painted panels had a beautiful coat of paint without noticeable cracks or failures.

Panels that had a coat of the same paint, sprayed on in the normal manner, exhibited cracking at the edges of the largest corrugations.

The above panels were subjected to Gardner Impact testing at room temperature. The post stamped panels resisted the maximum idention, 18.1 Nm (160 in-Ibs), without failure. The prepainted panel failed at 4.52 Nm (40 in-Ibs).

Similar tests were run, using a Gardner Impact set up in a -28.9 ° C (-20 ° F) cold room. This unit has a maximum capacity of 9.04 Nm (80 in-Ibs), and has a lesser curvature than the other unit. The composite bonded panel passed the maximum, 9.04 Nm (80 in-Ibs) without failure. The prepainted panel failed at 2.83 Nm (25 in-Ibs).

## Claims

1. A paint transfer composite comprising:
a) a continuous layer comprised of a heat-activatable adhesive capable of bonding to a substrate in a conventional heat-vacuum process and having a glass transition temperature below -15_{°}C and a tensile modulus of at least 1.72 MPa (250 p.s.i.) at 93 ° C, and
b) a continuous coating of dry paint on one major face of said adhesive layer.

2. A composite in accordance with claim 1 wherein said adhesive is an aliphatic polyurethane elastomer.

3. A composite in accordance with any preceding claim wherein the activation temperature of said adhesive is greater than about 100° C.

4. A composite in accordance with claim 3 wherein said activation temperature is greater than about 150°C.

5. A composite in accordance with any preceding claim wherein said continuous coating of dry paint is comprised of a clear, continuous coating on a dry, pigmented base coating.

6. A composite in accordance with any preceding claim further comprising a carrier liner in contact with said layer of dry paint.

7. A composite in accordance with claim 6 wherein said carrier liner is vacuum thermoformable.

8. A method of paint transfer comprising:
a) mounting a compound structural component in a vacuum chamber having an opening no smaller in area than the surface of said compound structural component to be painted such that said surface of said compound structural component to be painted communicates therewith;
b) sealing said opening of the vacuum chamber which communicates with said surface of the compound structural component with a paint transfer composite article in accordance with claim 1, in a manner such that said heat-activatable adhesive layer communicates with said surface of said compound structural component;
c) drawing air from said vacuum chamber and exposing said paint transfer composite to heat sufficiently to allow said composite to vacuum-thermoform onto said surface of said compound structural component but insufficient to activate said heat-activatable adhesive layer.
d) then exposing said heat-activatable adhesive layer to heat sufficient to activate said heat-activatable adhesive layer; and
e) allowing said heat-activated adhesive to cool while maintaining said vacuum used to thermoform said composite until said adhesive layer is cooled below its activation temperature.

9. A method of preparing a paint transfer composite comprising;
a) coating a carrier liner with a continuous layer of paint;
b) drying the paint to form a dry paint coating; and
c) coating the exposed surface of the paint coating with a continuous layer of a heat-activatable adhesive capable of bonding to a substrate in a conventional heat-vacuum process and having a low glass transition temperature below -15_{°}C and a tensile modulus of at least 1.72 MPa (250 p.s.i.) at 93_{°}C.

10. A method of preparing a painted cold-formed metal compound component comprising applying a composite as claimed in any of claims 1-7 to a substantially planar metal substrate with the heat-activatable adhesive layer in contact therewith, and cold forming said substrate to the desired compound shape.

11. A metal substrate manufactured according claim 10 comprising a substantially planar metal substrate, a continuous layer of a heat-activatable adhesive capable of bonding to a substrate in a conventional heat-vacuum process and having a sufficiently low glass transition temperature and a sufficiently high tensile modulus to resist damage to said adhesive layer on impact on at least one surface of said metal substrate and a continuous coating of dry paint on the exposed major face of said continuous layer of said heat-activatable adhesive.

## Patentansprüche

1. Verbundstoff zum Übertragen eines Anstrichstoffes mit
a) einer kontinuierlichen Schicht, die mindestens teilweise aus einem wärmeaktivierbaren Klebstoff besteht, der in einem üblichen unter der Einwirkung von Wärme und eines Vakuums durchgeführten Verfahren mit einem Substrat stoffschlüssig verbindbar ist und eine Einfriertemperatur unter -15_{°}C und einen Elastizitätsmodul von mindestens etwa 1,72 MPa bei 93 ° C hat, und
b) einem kontinuierlichen Überzug aus trockenem Anstrichstoff auf einer Breitseitenfläche der Klebstoffschicht.

2. Verbundstoff nach Anspruch 1, dadurch gekennzeichnet, daß der Klebstoff ein aliphatisches Polyurethanelastomer ist.

3. Verbundstoff nach einem der vorhergehenden Ansprüche, dadurch gekennzeichnet, daß der Klebstoff eine Aktivierungstemperatur von über etwa 100°C hat.

4. Verbundstoff nach Anspruch 3, dadurch gekennzeichnet, daß die Aktivierungstemperatur über 150 _{°} C liegt.

5. Verbundstoff nach einem der vorhergehenden Ansprüche, dadurch gekennzeichnet, daß der geschlossene Überzug aus trockenem Anstrichstoff aus einem klaren, geschlossenen Überzug auf einem trockenen, pigmentierten Grundüberzug besteht.

6. Verbundstoff nach einem der vorhergehenden Ansprüche, der ferner einen mit der Schicht aus trockenem Anstrichstoff in Berührung stehenden Rücken besitzt.

7. Verbundstoff nach Anspruch 6, dadruch gekennzeichnet, daß der Rücken vakuumwarmverformbar ist.

8. Verfahren zum Übertragen von Anstrichstoff, in dem
a) ein Verbundträger in einer Vakuumkammer gehaltert wird, die eine Öffnung hat, deren Fläche nicht kleiner ist als die mit einem Anstrichstoff zu versehende Oberfläche des Verbundträgers, wobei
die genannte Oberfläche des Verbundträgers mit der Öffnung kommuniziert;
b) die mit der genannten Oberfläche des Verbundträgers kommunizierende Öffnung der Vakuumkammer mit einem Verbundstoff zum Übertragen von Anstrichstoff nach Anspruch 1 derart dicht verschlossen wird, daß die wärmeaktivierbare Klebstoffschicht mit der genannten Oberfläche des Verbundträgers kommuniziert;
c) Luft aus der Vakuumkammer gesaugt und der Verbundstoff zum Übertragen von Anstrichstoff einer Wärmeeinworkung unterworfen wird, die genügt, um den Verbundstoff zum Anpassen an die genannte Oberfläche des Verbundträgers warmzuverformen, aber nicht genügt, um die wärmeaktivierbare Klebstoffschicht zu aktivieren;
d) danach die wärmeaktivierbare Klebstoffschicht einer Wärmeeinwirkung ausgesetzt wird, die zum Aktivieren der wärmeaktivierbaren Klebstoffschicht genügt; und
e) der wärmeaktivierbare Klebstoff abkühlen gelassen wird und dabei das zum Warmverformen des Verbundstoffes angewendete Vakuum aufrechterhalten wird, bis die Klebstoffschicht unter ihre Aktivierungstemperatur abgekühlt ist.

9. Verfahren zum Herstellen eines Verbundstoffes zum Übertragen von Anstrichstoff, in dem
a) auf einen Rücken eine geschlossene Schicht aus Anstrichstoff aufgetragen wird;
b) der Anstrichstoff unter Bildung einer trockenen Schicht aus Anstrichstoff getrocknet wird; und
c) auf die freiliegende Oberfläche des Überzuges aus Anstrichstoff eine geschossene Schicht aus einem wärmeaktivierbaren Klebstoff aufgetragen wird, der in einem üblichen unter der Einwirkung von Wärme und eines Vakuums durchgeführten Verfahren mit einem Substrat stoffschlüssig verbindbar ist und eine niedrige Einfriertemperatur unter -15°C und einen Elastizitätsmodul von mindestens 1,72 MPa bei 93 _{°} C hat.

10. Verfahren zum Herstellen eines mit einem Anstrichstoff versehenen, kaltverbormten Verbundgegenstandes aus Metall, in dem ein Verbundstoff nach einem der Ansprüche 1 bis 7 auf ein im wesentlichen ebenflächigen Metallsubstrat derart aufgelegt wird, daß die wärmeaktivierbare Klebstoffschicht mit dem Verbundgegenstand in Berührung steht, und das Substrat zu der für den Verbundgegenstand gewünschten Form kaltverformt wird.

11. Metallsubstrat, das nach Anspruch 10 hergestellt worden ist, mit einem im wesentlichen ebenen Metallsubstrat, einer auf mindestens einer Oberfläche des Metallsubstrats vorgesehenen, geschlossenen Schicht aus einem wärmeaktivierbaren Klebstoff, der in einem üblichen unter der Einwirkung von Wärme und eines Vakuums durchgeführten Verfahren mit einem Substrat stoffschlüssig verbindbar ist und eine so niedrige Einfriertemperatur und einen so hohen Elastizitätsmodul hat, daß die Klebstoffschicht einem Schlag beschädigungsfrei gewachsen ist, und einem auf der freiliegenden Breitseitenfläche der geschlossenen Schicht aus dem wärmeaktivierbaren Klebstoff vorgesehenen, geschlossenen Überzug aus trockenem Anstrichstoff.

## Revendications

1. Produit composite pour transfert de peinture, comprenant :
(a) une couche continue constituée par un adhésif activable à chaud, qui peut être joint à un substrat dans un processus usuel à chaleur et à vide et qui présente une température de transition vitreuse inférieure à -15 °C et un module à la traction d'au moins environ 1,79 MPa (250 livres par pouce²) à 93 ° C, et
(b) un revêtement continu de peinture sèche sur une face principale de cette couche adhésive.

2. Produit composite suivant la revendication 1, caractérisé en ce que l'adhésif susdit est un élastomère de polyuréthanne aliphatique.

3. Produit composite suivant l'une des revendications précédentes, caractérisé en ce que la température d'activation de l'adhésif est supérieure à environ 1000 C.

4. Produit composite suivant la revendication 3, caractérisé en ce que la température d'activation est supérieure à environ 1500 C.

5. Produit composite suivant l'une quelconque des revendications précédentes, caractérisé en ce que le revêtement continu précité de peinture sèche est constitué par un revêtement continu transparent sur un revêtement de base pigmenté sec.

6. Produit composite suivant l'une quelconque des revendications précédentes, caractérisé en ce qu'il comprend en outre une doublure de support en contact avec la couche susdite de peinture sèche.

7. Produit composite suivant la revendication 6, caractérisé en ce que la doublure de support est soumise à un thermoformage sous vide.

8. Procédé de transfert de peinture, caractérisé en ce qu'il comprend :
(a) le montage d'une pièce constitutive structurale composée dans une chambre à vide présentant une ouverture d'une aire non inférieure à la surface de cette pièce constitutive structurale composée à peindre, de manière que cette surface de la pièce constitutive structurale composée à peindre communique avec elle,
(b) l'obturation étanche de l'ouverture susdite, de la chambre à vide qui communique avec la surface précitée de la pièce constitutive structurale composée, par un produit composite pour transfert de peinture suivant la revendication 1, de manière telle que la couche adhésive activable à chaud communique avec cette surface de la pièce constitutive structurale composée,
(c) l'aspiration de l'air depuis la chambre à vide et l'exposition du produit composite pour transfert de peinture à une chaleur, de façon suffisante que pour permettre à ce produit composite de subir un thermoformage sous vide sur la surface précitée de la pièce constitutive structurale composée, mais insuffisante pour l'activation de la couche adhésive activable à chaud,
(d) l'exposition ensuite de la couche adhésive activable à chaud à une chaleur suffisante pour activer cette couche adhésive activable à chaud, et
(e) en laissant refroidir l'adhésif activé à chaud, tout en entretenant le vide susdit utilisé pour le thermoformage du produit composite jusqu'à ce que la couche adhésive soit refroidie en dessous de sa température d'activation.

9. Procédé de préparation d'un produit composite pour transfert de peinture, caractérisé en ce qu'il comprend :
(a) le revêtement d'une doublure de support par une couche continue de peinture,
(b) le séchage de la peinture pour former un revêtement de peinture sèche, et
(c) le revêtement de la surface exposée du revêtement de peinture par une couche continue d'un adhésif activable à chaud, qui peut être joint à un substrat dans un procédé usuel à chaleur et à vide et qui présente une basse température de transition vitreuse inférieure à -15 °C et un module à la traction d'au moins 1,72 MPa (250 livres par pouce²) à 93°C.

10. Procédé de préparation d'une pièce constitutive composée métallique formée à froid et peinte, caractérisé en ce qu'il comprend l'application d'un produit composite suivant l'une quelconque des revendications 1 à 7 à un support métallique essentiellement plan, la couche adhésive activable à la chaleur étant en contact avec celui-ci, et le formage à froid du support susdit pour qu'il présente la forme composée désirée.

11. Support métallique, fabriqué suivant la revendication 10, comprenant un support métallique essentiellement plan, une couche continue d'un adhésif activable à chaud, qui peut être joint à un substrat dans un procédé usuel à chaleur et à vide et qui présente une température de transition vitreuse suffisamment basse et un module à la traction suffisamment élevé pour résister à des dégâts à cette couche adhésive lors de chocs, cette couche d'adhésif étant prévue sur au moins une surface du support métallique précité, et un revêtement continu de peinture sèche sur la surface principale exposée de la couche continue susdite de l'adhésif activable à chaud.
